# EUROPÄISCHE PATENTSCHRIFT

(11) **EP 4 605 286 B1**
(45) Veröffentlichungstag und Bekanntmachung des Hinweises auf die Patenterteilung: **22.07.2026**
(21) Anmeldenummer: 23777240.5
(22) Anmeldetag: 26.09.2023
(51) Int. Cl.: B60T 13/74, B60T 8/17, B60T 8/172, B60T 17/22

(54) **VERFAHREN ZUM EINSTELLEN EINES ANLEGEDRUCKS EINER FAHRZEUGBREMSE UND BETREFFENDE FAHRZEUGBREMSE**
METHOD FOR ADJUSTING THE APPLIED PRESSURE OF A VEHICLE BRAKE, AND VEHICLE BRAKE IN QUESTION
PROCÉDÉ DE RÉGLAGE DE LA PRESSION APPLIQUÉE D'UN FREIN DE VÉHICULE, ET FREIN DE VÉHICULE EN QUESTION

(30) Priorität: 17.10.2022 DE 102022127064
(43) Veröffentlichungstag der Anmeldung: 27.08.2025
(73) Patentinhaber: ZF CV Systems Global GmbH, 3006 Bern (CH)
(72) Erfinder: MÜLLER-DEILE, Felix, 30449 Hannover (DE); KRAMER, Rupert, 88048 Friedrichshafen (DE); BITZER, Franz, 88048 Friedrichshafen (DE); BENSCH, Uwe, 30161 Hannover (DE)
(74) Vertreter: Rabe, Dirk-Heinrich
(86) Internationale Anmeldenummer: PCT/EP2023/076462
(87) Internationale Veröffentlichungsnummer: WO 2024/083454

(56) Entgegenhaltungen:
- EP-A2- 0 509 225
- EP-B1- 0 721 409
- WO-A1-2020/007513
- DE-A1- 4 206 240
- US-A- 6 022 084

## Beschreibung

Die Erfindung betrifft ein Verfahren zum Einstellen eines Anlegedrucks einer Fahrzeugbremse, insbesondere einer Nutzfahrzeug-Scheibenbremse, eines Kraftfahrzeugs während der Fahrt des Kraftfahrzeugs.

Verfahren zum Einstellen eines Anlegedrucks einer Fahrzeugbremse sind aus dem Stand der Technik bekannt und beruhen beispielsweise darauf, den Anlegedruck zu parametrisieren und in einem Bremssteuergerät zu hinterlegen. Bei Betätigung des Bremspedals wird ein fest parametrierter Anlegedruck ausgesteuert, um das Lüftspiel der Reibbremse zu überwinden. Durch den Anlegedruck ist das Fahrzeug bremsbereit und die Ansprechzeiten für einen Verzögerungswunsch können schneller und ruckfrei umgesetzt werden.

Als Anlegedruck wird jener Bremsdruck verstanden, der auf das Bremssystem aufgebracht wird, wenn die Bremse betriebsbereit gehalten werden soll, jedoch kein Verzögerungswunsch besteht. Er wird typischerweise so gewählt, dass er gerade groß genug ist, die mechanische Reibung des Bremssattels zu überwinden und den Abstand zwischen Bremsscheibe und Bremsbelag, das sogenannte Lüftspiel, auf nahezu Null zu reduzieren, die Bremse gleichzeitig jedoch minimale Reibungsverluste verursacht. Der Anlegedruck unterliegt somit dem Spannungsfeld zwischen der Bereitstellung möglichst geringer Bremsreaktionszeiten einerseits und dem Generieren möglichst geringer Reibmomente andererseits.

Wenngleich sich aus dem Stand der Technik bekannte Verfahren bewährt haben, um mittels des Aufbringens des Anlegedrucks ein vorteilhaftes Ansprechverhalten der Fahrzeugbremse sicherzustellen, wurde beobachtet, dass das Aufbringen des Anlegedrucks in der Realität auch dann zu erheblichen Reibmomenten und damit Bremskräften führen kann, wenn keine Verzögerung gefordert und gewünscht ist. Hierdurch erhöht sich der Verschleiß der Fahrzeugbremse. Ein besonderes Optimierungspotenzial ergibt sich bei elektrisch angetriebene Nutzfahrzeugen mit elektrischem Antrieb und elektronisch geregeltem pneumatischen Bremssystem (EBS). Denn für den Fall, dass die Fahrzeugbremse an einem elektrisch angetriebenen Fahrzeug montiert ist, geht ferner kinetische Energie verloren, die sodann einer Rekuperation nicht mehr zur Verfügung steht.

Die EP0721409B1 betrifft ein Verfahren und eine Vorrichtung zur Ermittlung des Anlegedrucks einer Bremseinrichtung für ein Fahrzeug, wobei ein Maß für den Druck in der Bremsanlage sowie die Drehgeschwindigkeit wenigstens eines zu bremsenden Rades erfasst wird und aus dem zeitlichen Verlauf dieser Drehgeschwindigkeit der Anlegezeitpunkt der Bremseinrichtung und damit deren Anlegedruck abgeleitet wird.

Die US6022084A betrifft Verfahren und Vorrichtung zur Steuerung der Bremsanlage eines Fahrzeugs.

Die EP0509225A2 offenbart eine Druckluft-Bremsanlage, bei der ein Anlegedruck der einzelnen Radbremsen aus dem Bremsdruck-Zeit-Verlauf oder aus dem Bremsdruck-HubVerlauf ermittelt wird.

Die WO2020007513A1 betrifft eine Vorrichtung und ein Verfahren zur Steuerung einer hydraulischen Kraftfahrzeugbremsanlage mit Trommelbremsen, die während des Fahrbetriebs als Betriebsbremsen fungieren, und einem elektromechanischen Bremskraftverstärker.

Die DE4206240A1 betrifft ein Druckluftbremsanlage für ein Kraftfahrzeug.

Vor diesem Hintergrund lag der Erfindung die Aufgabe zugrunde, ein Verfahren der eingangs bezeichneten Art dahingehend weiterzubilden, dass die im Stand der Technik aufgefundenen Nachteile möglichst weitgehend behoben werden. Insbesondere war ein Verfahren anzugeben, welches die Einstellung des Anlegedrucks bei einer Fahrzeugbremse optimiert, um unerwünschte Reibmomente an der Bremse zu reduzieren.

Erfindungsgemäß wird die Aufgabe bei einem Verfahren der eingangs genannten Art durch die Schritte gelöst: Anlegen eines Ausgangsanlegedrucks an die Fahrzeugbremse, Ermitteln einer Bremswirkung der Fahrzeugbremse, während der Ausgangsanlegedruck an der Fahrzeugbremse anliegt, Vergleichen der ermittelten Bremswirkung mit einer Grenzbremswirkung, Reduzieren des Ausgangsanlegedrucks auf einen reduzierten Anlegedruck, wenn die ermittelte Bremswirkung die Grenzbremswirkung überschreitet.

Die Erfindung macht sich die Erkenntnis zunutze, dass durch die Ermittlung einer Bremswirkung der Fahrzeugbremse während der Ausgangsanlegedruck an der Fahrzeugbremse anliegt, überprüft werden kann, ob der gewählte Ausgangsanlegedruck Reibmomente und damit Bremskräften generiert, die ein definierbares Maß überschreiten, hier als Grenzbremswirkung bezeichnet, wenn operativ keine Bremswirkung gefordert und gewünscht ist. Sollte dies der Fall sein und die Grenzbremswirkung überschritten werden, so wird vorgeschlagen, den Anlegedruck zu reduzieren. Hierdurch werden unnötig hohe Bremsmomente bei Nichtnutzung der Bremse vermieden. Ferner sinkt der Verschleiß der Radbremsen bzw. Bremsbeläge. Zugleich steht mehr kinetische Energie für die Rekuperation zur Verfügung, sodass sich bei einem elektrisch angetriebenen Fahrzeug eine Erhöhung der Reichweite einstellt oder aber die Batterie kleiner dimensioniert werden kann. Unter einer Bremswirkung werden im Rahmen der Erfindung sowohl eine Bremskraft als auch ein Bremsmoment verstanden, welche bei Anliegen des Anlegedrucks an der Bremse generiert werden.

Die Grenzbremswirkung wird vorzugsweise empirisch ermittelt und in einer Steuerung hinterlegt. Sie stellt jene Bremswirkung dar, bei deren Überschreiten eine Reduzierung des Anlegedrucks erfolgen soll. Insgesamt wird durch ein feinfühliges Reduzieren des Ausgangsanlegedrucks sichergestellt, dass ein vorteilhaftes Ansprechverhalten der Fahrzeugbremse sichergestellt bleibt, das heißt, dass eine gewünschte Verzögerung rasch generiert wird. Hierzu wird durch das Verfahren sichergestellt, dass das Lüftspiel auch weiterhin minimal eingeregelt wird. Die Grenzbremswirkung ist dabei beliebig definierbar und kann, je nach gewünschtem Anwendungsbereich, beispielsweise auch null betragen, das heißt, derart gewählt werden, dass nach der Optimierung nach dem Anlegen des Anlegedrucks keine messbare Bremswirkung mehr vorliegen soll. Vorzugsweise ist die Grenzbremswirkung so gering, dass sie mittels vorhandener Messmittel gerade noch messbar ist.

Der Erfindungsgegenstand wird dadurch weitergebildet, dass der reduzierte Anlegedruck als neuer Ausgangsanlegedruck definiert wird und das Verfahren ferner umfasst: Wiederholen der Verfahrensschritte, bis die ermittelte Bremswirkung kleiner ist als die Grenzbremswirkung. Insoweit wird vorgeschlagen, den Anlegedruck iterativ derart zu reduzieren, dass die ermittelte Bremswirkung die Grenzbremswirkung nicht überschreitet. Auf diese Weise kann besonders feinfühlig jener Punkt im Rahmen der Optimierung erreicht werden, bei dem beispielsweise bei einer gewünschten Grenzbremswirkung von null oder nahezu null keine Bremswirkung generiert wird, wenn diese nicht gewünscht ist, und gleichzeitig das Lüftspiel so gering ist, dass die Ansprechzeit der Bremse minimiert ist.

Gemäß einer bevorzugten Ausführungsform erfolgt das Ermitteln der Bremswirkung der Fahrzeugbremse mittels wenigstens eines Radsensors. Der Radsensor ermittelt eine Verzögerung des Rades, welches wiederum ein Maß für die Bremswirkung der Bremse ist. Insoweit werden für diese Ausführungsform Sensoren verwendet, die an Nutzfahrzeugen in vielen Fällen ohnehin schon existieren. Umfangreiche Hardware-Nachrüstungen sind daher nicht erforderlich. Die Implementierung des erfindungsgemäßen Verfahrens lässt sich kostengünstig bewerkstelligen.

Gemäß einer alternativen Ausführungsform erfolgt das Ermitteln der Bremswirkung der Fahrzeugbremse auf Basis einer Drehmomentänderung eines elektrischen Fahrzeugantriebs des Kraftfahrzeugs. Hierbei können die ohnehin bei einem elektrisch angetriebenen Fahrzeug vorhandene Informationen über das aktuelle Drehmoment des Antriebs verwendet werden, um zu ermitteln, ob der Anlegedruck eine ungewünschte Bremswirkung mit sich bringt. Insbesondere für ein Szenario, bei dem das elektrisch angetriebene Fahrzeug mit konstanter Geschwindigkeit und aktiviertem Cruise Control betrieben wird, würde der elektrische Fahrzeugantrieb, um die Geschwindigkeit des Fahrzeugs konstant zu halten, sein Drehmoment erhöhen, um die Bremswirkung der Bremse zu kompensieren, wenn der Anlegedruck angelegt wird. Diese Erhöhung des Antriebsmoments lässt sich nun als Maß dafür heranziehen, ob der Anlegedruck optimal eingestellt ist oder ob dieser derart hoch ist, dass eine ungewünschte Bremswirkung beim Anlegen des Anlegedrucks erzeugt wird.

Gemäß einer bevorzugten Ausführungsform ist die Grenzbremswirkung derart definiert, dass keine messbare Bremswirkung an der Fahrzeugbremse auftritt. Mit anderen Worten ist das Optimierungsverfahren dann abgeschlossen, wenn der Anlegedruck derart optimiert wurde, dass beim Anlegen desselben keine messbare Bremswirkung, beispielsweise in Form einer Bremskraft oder eines Bremsmoments, an der Fahrzeugbremse oder am Gesamtfahrzeug mehr auftritt bzw. gemessen werden kann. Dies äußert sich darin, dass sich nach dem Anlegen des Anlegedrucks keine messbare Fahrzeugverzögerung oder messbare Erhöhung des Antriebsdrehmoments des Antriebsmotors des Fahrzeugs einstellt, wenn dieser derart konfiguriert ist, die Fahrzeuggeschwindigkeit konstant zu halten. Dies ist, wie beschrieben, vorteilhaft zur Vermeidung unnötig hoher Bremsmomente, zur Reduzierung des Verschleißes der Radbremsen sowie zur Bereitstellung kinetischer Energie für die Rekuperation.

Vorzugsweise wird der Ausgangsanlegedruck vor dem erstmaligen Verfahrensdurchlauf derart gewählt, dass durch ein Anlegen des Ausgangsanlegedrucks ein Lüftspiel der Fahrzeugbremse vollständig oder nahezu vollständig überwunden wird. Auf diese Weise wird sichergestellt, dass ein Verzögerungswunsch rasch mittels der Bremse realisiert werden kann. Der Ausgangsanlegedruck ist vorzugsweise ein fest hinterlegter parametrierter Anlegedruck.

Vorzugsweise erfolgt das Anlegen des Ausgangsanlegedrucks für eine Zeitspanne von einer Sekunde bis 10 Sekunden. Auf diese Weise kann die Bremswirkung der Bremse bzw. des Fahrzeugs trotz der im Gesamtsystem vorhandenen Trägheiten sicher und zuverlässig ermittelt werden. Gleichzeitig bleiben die Umgebungsbedingungen während des Bremsvorgangs weitestgehend konstant. Für das Ausführungsbeispiel, bei dem durch das Anlegen des Anlegedrucks eine Verzögerung des Fahrzeugs erfolgt, liegt die Zeitspanne vorzugsweise im Bereich von einer Sekunde bis 5 Sekunden. Hierdurch wird vermieden, dass der Fahrkomfort gestört wird und der Fahrer veranlasst wird, die Verzögerung auszugleichen. Für das Ausführungsbeispiel, bei dem der elektrische Fahrzeugantrieb durch Drehmomenterhöhung die Bremswirkung bzw. Bremskraft ausgleicht, liegt die Zeitspanne aus regelungstechnischen Überlegungen heraus vorzugsweise in einem Bereich von 3 Sekunden bis 10 Sekunden.

Gemäß einer bevorzugten Ausführungsform erfolgt das Reduzieren des Ausgangsanlegedrucks derart, dass der Ausgangsanlegedruck um eine definierte Druckdifferenz reduziert wird. Vorzugsweise beträgt die Druckdifferenz 0,05 bar bis 0,1 bar. Das betreffende Vorgehen und die entsprechende Druckdifferenz haben sich für eine Vielzahl von Anwendungsfällen als besonders bevorzugt erwiesen.

Gemäß einer bevorzugten Weiterbildung wird das Verfahren für mehrere oder alle Fahrzeugbremsen des Kraftfahrzeugs durchgeführt, insbesondere für alle Fahrzeugbremsen einer oder mehrere Achsen des Kraftfahrzeugs oder für sämtliche Fahrzeugbremsen des Kraftfahrzeugs. Insoweit kann die Gesamteffizienz des gesamten Fahrzeugsystems positiv beeinflusst werden. Für den Fall, dass es sich bei dem Fahrzeug um ein elektrisch angetriebenes Fahrzeug handelt, steht somit mehr Energie für die Rekuperation zur Verfügung und infolgedessen steigt die Gesamt-Fahrzeugreichweite bzw. sinkt die vorzuhaltende Batterieleistung für eine gewünschte Reichweite.

Gemäß einer bevorzugten Ausführungsform erfolgt das Anlegen des Ausgangsanlegedrucks an die Fahrzeugbremse periodisch. Das periodische Anlegen des Ausgangsanlegedrucks stellt sicher, dass der Anlegedruck regelmäßig überprüft wird und an möglicherweise veränderte Rahmenbedingungen angepasst wird. Beispielsweise macht ein zunehmender Bremsenverschleiß ein Anpassen des Anlegedrucks erforderlich. Selbiges kann sich jedoch auch aus veränderten Umweltbedingungen ergeben. Vorzugsweise ist eine geringere Intervalldauer bei initialer Verfahrensdurchführung vorgesehen. Beispielsweise kann die Intervalldauer nach der Inbetriebnahme des Fahrzeugs, verbunden mit einem Reset der Zündung, im Bereich von 30 Sekunden bis 2 Minuten liegen. Nachdem ein optimaler Anlegedruck ermittelt wurde, wird die Intervalldauer vorzugsweise vergrößert, beispielsweise auf 15 Minuten bis 30 Minuten.

Gemäß einer weiteren Ausführungsform weist das Verfahren den Schritt auf: Erhöhen des Ausgangsanlegedrucks, wenn die ermittelte Bremswirkung kleiner ist als eine Mindestbremswirkung. Auf diese Weise kann sichergestellt werden, dass der Anlegedruck nicht derart reduziert wird, dass das Lüftspiel zu große Werte annimmt und somit die Reaktionszeit der Bremse unerwünscht zunimmt.

Die Erfindung ist vorstehend unter Bezugnahme auf ein Verfahren beschrieben worden. In einem weiteren Aspekt betrifft die Erfindung ein Steuergerät für eine Fahrzeugbremse eines Nutzfahrzeugs. Die Erfindung löst die eingangs bezeichnete Aufgabe in Bezug auf das Steuergerät, indem dieses dazu eingerichtet ist, das Verfahren nach einem der obenstehenden Ausführungsbeispiele auszuführen. Gemäß einer bevorzugten Weiterbildung ist das Steuergerät als dezidiertes Steuergerät oder als zentrales Steuergerät ausgebildet. Das Steuergerät macht sich die gleichen Vorteile und bevorzugten Ausführungsformen zunutze wie das erfindungsgemäße Verfahren und umgekehrt. Diesbezüglich wird auf die obigen Ausführungen verwiesen und deren Inhalt hier mit einbezogen.

In einem weiteren Aspekt betrifft die Erfindung ein Computerprogrammprodukt. Die Erfindung löst die eingangs bezeichnete Aufgabe in Bezug auf das Computerprogrammprodukt, indem dieses Befehle enthält, die, wenn sie auf einem Computer ausgeführt werden, den Computer veranlassen, ein Steuergerät nach einem der vorstehenden Ausführungsbeispiele zu bilden und/oder das Verfahren nach einem der obenstehenden Ausführungsbeispiele auszuführen. Auch das Computerprogrammprodukt macht sich die gleichen Vorteile und bevorzugten Ausführungsformen zunutze wie das erfindungsgemäße Verfahren und das erfindungsgemäße Steuergerät und umgekehrt. Diesbezüglich wird auf die obigen Ausführungen verwiesen und deren Inhalt hier mit einbezogen.

In einem weiteren Aspekt betrifft die Erfindung ein Kraftfahrzeug, insbesondere ein Nutzkraftfahrzeug. Die Erfindung löst die eingangs bezeichnete Aufgabe in Bezug auf das Kraftfahrzeug, indem dieses wenigstens eine Fahrzeugbremse und ein Steuergerät umfasst, welche nach einem der obenstehenden Ausführungsbeispiele ausgebildet sind. Vorzugsweise ist das Kraftfahrzeug als elektrisch angetriebenes Kraftfahrzeug ausgebildet. Auch das Kraftfahrzeug macht sich die gleichen Vorteile und bevorzugten Ausführungsformen zunutze wie das erfindungsgemäße Verfahren, das erfindungsgemäße Steuergerät und das erfindungsgemäße Computerprogrammprodukt sowie umgekehrt. Diesbezüglich wird auf die obigen Ausführungen verwiesen und deren Inhalt hier mit einbezogen.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind die Zeichnungen, wo zur Erläuterung dienlich, in schematischer und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen.

Im Einzelnen zeigen:
- Fig. 1: ein Ausführungsbeispiel eines erfindungsgemäßen Kraftfahrzeugs mit einer erfindungsgemäßen Fahrzeugbremse in einer schematischen Ansicht;
- Fig. 2: ein erstes Ausführungsbeispiel eines Verfahrens zum Einstellen eines Anlegedrucks einer Fahrzeugbremse als Blockschaltbild;
- Fig. 3: ein zweites Ausführungsbeispiel eines Verfahrens zum Einstellen eines Anlegedrucks einer Fahrzeugbremse als Blockschaltbild;
- Fig. 4: eine schematische Darstellung eines erfindungsgemäßen Steuergeräts;
- Fig. 5: eine schematische Darstellung eines erfindungsgemäßen Computerprogrammprodukts; und
- Fig. 6: eine schematische Darstellung eines erfindungsgemäßen Kraftfahrzeugs mit einem erfindungsgemäßen Steuergerät.

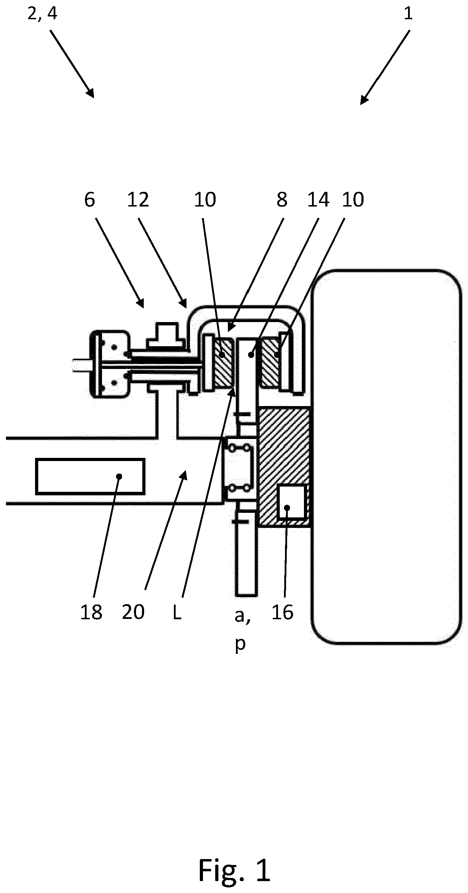

Fig. 1 zeigt ein Kraftfahrzeug 1, welches hier nur schematisch dargestellt ist. Das Kraftfahrzeug 1 weist eine Fahrzeugbremse 2 auf. Die Fahrzeugbremse 2 ist vorliegend als Nutzfahrzeug-Scheibenbremse 4 ausgebildet. Die Fahrzeugbremse 2 weist einen Bremsenträger 6 auf. Der Bremsenträger 6 weist eine Bremsbelagaufnahme 8 auf. In der Bremsbelagaufnahme 8 sind zwei Bremsbeläge 10 angeordnet, welche in der Bremsbelagaufnahme 8 axial verschiebbar geführt und abgestützt sind. Die Fahrzeugbremse 2 weist ferner einen axial relativ zu dem Bremsenträger 6 bewegbaren Bremssattel 12 auf. In dem in Fig. 1 gezeigten Zustand weist die Fahrzeugbremse 2 ein Lüftspiel L auf, welches den Abstand zwischen einer Bremsscheibe 14 und dem Bremsbelag 10 beschreibt.

Der Fahrzeugbremse 2 ist ferner ein Radsensor 16 zugeordnet, welcher dazu eingerichtet ist, eine Bremswirkung Fb der Bremsscheibe 14 zu ermitteln, insbesondere dann, wenn ein Anlegedruck p an die Fahrzeugbremse 2 angelegt ist. Das Kraftfahrzeug 1 weist ferner einen elektrischen Fahrzeugantrieb 18 auf, welcher, wie hier exemplarisch dargestellt ist, an einer Achse 20 angeordnet ist.

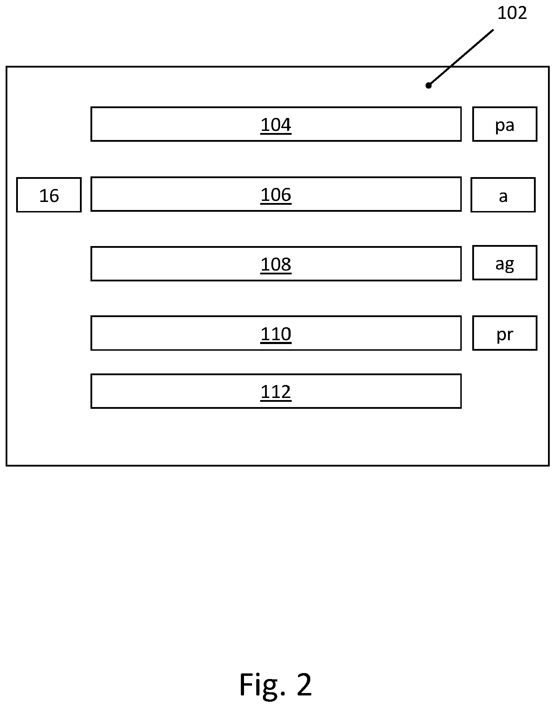

Fig. 2 zeigt ein Blockschaltbild eines ersten Ausführungsbeispiels eines erfindungsgemäßen Verfahrens 102 zum Einstellen eines Anlegedrucks p einer Fahrzeugbremse 2 eines Kraftfahrzeugs 1. Bei der Fahrzeugbremse 2 handelt es sich insbesondere um eine Nutzfahrzeug-Scheibenbremse 4. Das Verfahren weist einen Schritt 104 auf, wonach ein Anlegen eines Ausgangsanlegedrucks pa an die Fahrzeugbremse 2 erfolgt. Anschließend erfolgt im Schritt 106 ein Ermitteln einer Bremswirkung Fb der Fahrzeugbremse 2, während der Ausgangsanlegedruck pa an der Fahrzeugbremse 2 anliegt. Das Verfahren weist ferner einen Schritt 108 auf, wonach ein Vergleichen der ermittelten Bremswirkung Fb mit einer Grenzbremswirkung Fg erfolgt. Wenn die ermittelte Bremswirkung Fb die Grenzbremswirkung Fg überschreitet, erfolgt im Schritt 110 ein Reduzieren des Ausgangsanlegedrucks pa auf einen reduzierten Anlegedruck pr.

Vorzugsweise wird der reduzierte Anlegedruck pr als neuer Ausgangsanlegedruck pa definiert, wobei das Verfahren den Schritt umfasst: Wiederholen 112 der Verfahrensschritte 104 bis 110, bis die ermittelte Bremswirkung Fb kleiner ist als die Grenzbremswirkung Fg.

In dem in Fig. 2 gezeigten Ausführungsbeispiel erfolgt das Ermitteln 106 der Bremswirkung Fb der Fahrzeugbremse 2 mittels wenigstens eines Radsensors 16. Die Verzögerung des Kraftfahrzeugs 1 ist damit ein Maß für die Bremswirkung Fb der Fahrzeugbremse 2. Die Grenzbremswirkung Fg ist derart definiert, dass keine messbare Bremswirkung an der Fahrzeugbremse 2 auftritt. Ferner wird der Ausgangsanlegedruck pa vor dem erstmaligen Durchlauf des Verfahrens 102 derart gewählt, dass durch ein Anlegen des Ausgangsanlegedrucks pa das Lüftspiel L der Fahrzeugbremse 2 vollständig oder nahezu vollständig überwunden wird.

Das Anlegen 104 des Ausgangsanlegedrucks pa erfolgt insbesondere für eine Zeitspanne von einer Sekunde bis 10 Sekunden. Ferner erfolgt das Reduzieren 110 des Ausgangsanlegedrucks pa derart, dass der Ausgangsanlegedruck pa um eine definierte Druckdifferenz reduziert wird. Das Verfahren 102 kann für eine, mehrere oder alle Fahrzeugbremsen 2 des Kraftfahrzeugs 1 durchgeführt werden, insbesondere für alle Fahrzeugbremsen 2 einer oder mehrere Achsen 20 des Kraftfahrzeugs 1 oder für sämtliche Fahrzeugbremsen 2 des Kraftfahrzeugs 1. In Fig. 1 ist lediglich eine der Fahrzeugbremsen 2 des Kraftfahrzeugs 1 schematisch dargestellt. Ferner erfolgt das Anlegen 104 des Ausgangsanlegedrucks pa vorzugsweise periodisch.

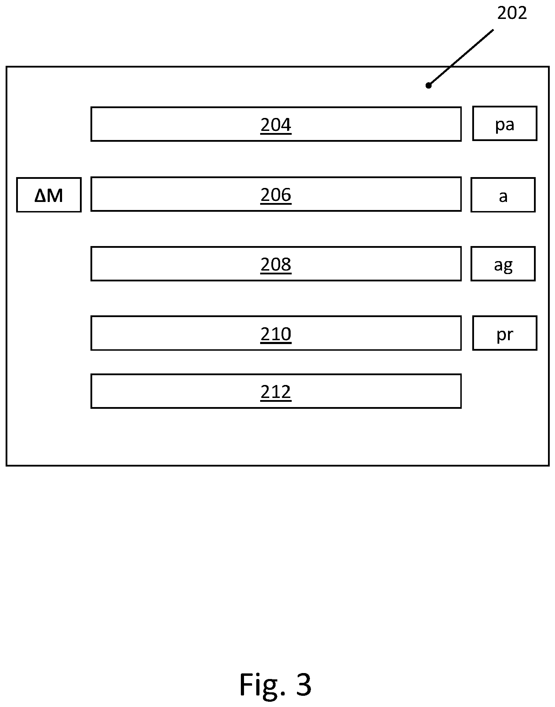

Fig. 3 zeigt ein Blockschaltbild einer alternativen Ausführungsform eines erfindungsgemäßen Verfahrens 202 zum Einstellen eines Anlegedrucks p einer Fahrzeugbremse 2 eines Kraftfahrzeugs 1, wobei die Fahrzeugbremse 2 insbesondere als Nutzfahrzeug-Scheibenbremse 4 ausgebildet ist. Das Verfahren weist die Schritte auf: Anlegen 204 eines Ausgangsanlegedrucks pa an die Fahrzeugbremse 2, Ermitteln 206 einer Bremswirkung Fb der Fahrzeugbremse 2, während der Ausgangsanlegedruck pa an der Fahrzeugbremse 2 anliegt, Vergleichen 208 der ermittelten Bremswirkung Fb mit einer Grenzbremswirkung Fg, Reduzieren 210 des Ausgangsanlegedrucks pa auf einen reduzierten Anlegedruck pr, wenn die ermittelte Bremswirkung Fb die Grenzbremswirkung Fg überschreitet.

Vorzugsweise wird nach dem Durchlauf des Verfahrens 202 der reduzierte Anlegedruck pr als neuer Ausgangsanlegedruck pa definiert. Insoweit umfasst das Verfahren 202 ferner den Schritt: Wiederholen 212 der Verfahrensschritte 204 bis 210, bis die ermittelte Bremswirkung Fb kleiner ist als die Grenzbremswirkung Fg. Anders als das Verfahren 102 gemäß dem ersten Ausführungsbeispiel erfolgt beim Verfahren 202 ein Ermitteln 206 der Bremswirkung Fb der Fahrzeugbremse 2 auf Basis einer Drehmomentänderung ΔM eines elektrischen Fahrzeugantriebs 18 des Kraftfahrzeugs 1, während dieser die Fahrzeuggeschwindigkeit konstant hält. Die übrigen Verfahrensmerkmale und Weiterbildungen entsprechen jenen aus dem Ausführungsbeispiel gemäß Fig. 2, sodass zur Vermeidung von Wiederholungen hierauf Bezug genommen wird.

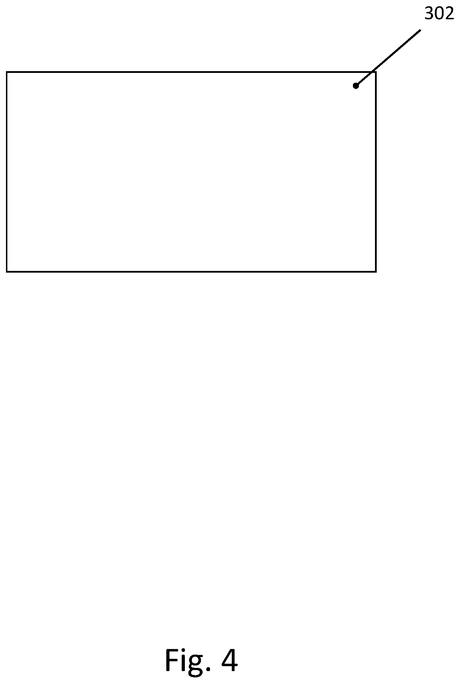

Fig. 4 zeigt schematisch ein Steuergerät 302 für eine Fahrzeugbremse 2 eines Kraftfahrzeugs. 1. Das Steuergerät 302 ist dazu eingerichtet, das Verfahren 102, 202 nach den Fig. 2 oder 3 auszuführen. Das Steuergerät 302 kann als dezidiertes Steuergerät 302 oder als zentrales Steuergerät 302 ausgebildet sein.

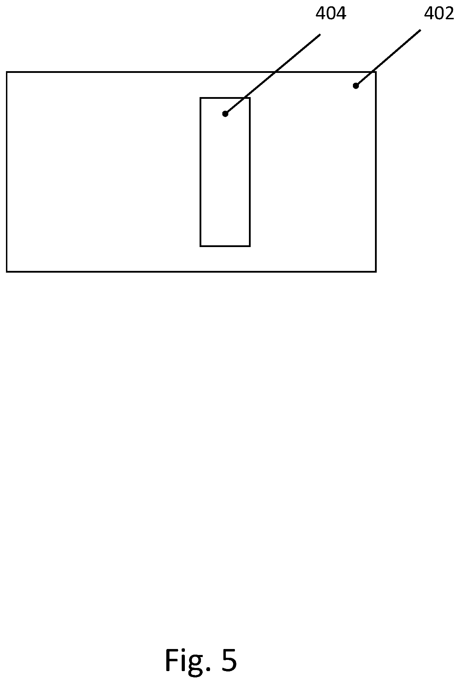

Fig. 5 zeigt schematisch ein Computerprogrammprodukt 402. Das Computerprogrammprodukt 402 enthält Befehle, die, wenn sie auf einem Computer ausgeführt werden, den Computer veranlassen, ein Steuergerät 302 gemäß Fig. 4 zu bilden und/oder die Verfahren 102, 202 der Fig. 2 und 3 auszuführen.

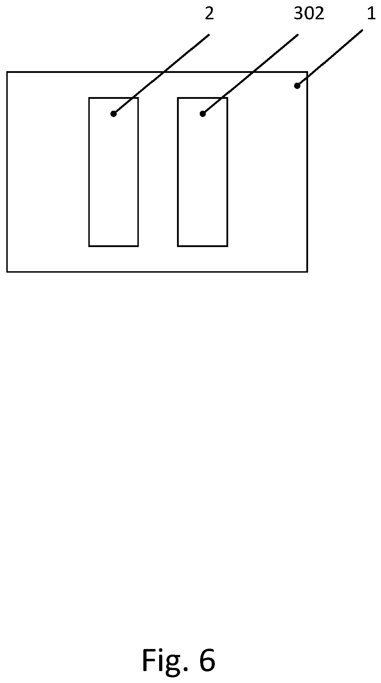

Fig. 6 zeigt schematisch ein Kraftfahrzeug 1 mit einer Fahrzeugbremse 2 und einem Steuergerät 302. Das Steuergerät 302 entspricht dem Steuergerät 302 gemäß Fig. 4. Das Kraftfahrzeug 1 ist insbesondere als elektrisch angetriebenes Kraftfahrzeug 1 ausgebildet.

### Bezugszeichen (Teil der Beschreibung):

- 1: Kraftfahrzeug
- 2: Fahrzeugbremse
- 4: Nutzfahrzeug-Scheibenbremse
- 6: Bremsenträger
- 8: Bremsbelagaufnahme
- 10: Bremsbelag
- 12: Bremssattel
- 14: Bremsscheibe
- 16: Radsensor
- 18: elektrischer Fahrzeugantrieb
- 20: Achse
- 102: Einstellverfahren
- 104: Anlegen eines Ausgangsanlegedrucks
- 106: Ermitteln einer Bremswirkung der Fahrzeugbremse
- 108: Vergleichen der ermittelten Bremswirkung mit einer vorgegebenen Grenzbremswirkung
- 110: Reduzieren des Ausgangsanlegedrucks
- 112: Wiederholen der Verfahrensschritte
- 202: Einstellverfahren
- 204: Anlegen eines Ausgangsanlegedrucks
- 206: Ermitteln einer Bremswirkung der Fahrzeugbremse
- 208: Vergleichen der ermittelten Bremswirkung mit einer vorgegebenen Grenzbremswirkung
- 210: Reduzieren des Ausgangsanlegedrucks
- 212: Wiederholen der Verfahrensschritte
- 302: Steuergerät
- 402: Computerprogrammprodukt
- 404: Befehle
- Fb: Bremswirkung
- Fg: Grenzbremswirkung
- L: Lüftspiel
- ΔM: Drehmomentänderung
- p: Anlegedruck
- pr: reduzierter Anlegedruck
- pa: Ausgangsanlegedruck

## Patentansprüche

1. Verfahren (102, 202) zum Einstellen eines Anlegedrucks (p) einer Fahrzeugbremse (2), insbesondere einer Nutzfahrzeug-Scheibenbremse (4), eines Kraftfahrzeugs (1) während der Fahrt des Kraftfahrzeugs (1), mit den Schritten:
- Anlegen (104, 204) eines Ausgangsanlegedrucks (pa) an die Fahrzeugbremse (2),
- Ermitteln (106, 206) einer Bremswirkung (Fb) der Fahrzeugbremse (2), während der Ausgangsanlegedruck (pa) an der Fahrzeugbremse (2) anliegt, **gekennzeichnet durch** die Schritte:
- Vergleichen (108, 208) der ermittelten Bremswirkung (Fb) mit einer Grenzbremswirkung (Fg),
- Reduzieren (110, 210) des Ausgangsanlegedrucks (pa) auf einen reduzierten Anlegedruck (pr), wenn die ermittelte Bremswirkung (Fb) die Grenzbremswirkung (Fg) überschreitet.

2. Verfahren (102, 202) nach Anspruch 1,
wobei der reduzierte Anlegedruck (pr) als neuer Ausgangsanlegedruck (pa) definiert wird und wobei das Verfahren ferner umfasst:
- Wiederholen (112, 212) der Verfahrensschritte (104-110, 204-210), bis die ermittelte Bremswirkung (Fb) kleiner ist als die Grenzbremswirkung (Fg).

3. Verfahren (102) nach Anspruch 1 oder 2,
wobei das Ermitteln (106) der Bremswirkung (Fb) der Fahrzeugbremse (2) mittels wenigstens eines Radsensors (16) erfolgt.

4. Verfahren (202) nach Anspruch 1 oder 2,
wobei das Ermitteln (206) der Bremswirkung (Fb) der Fahrzeugbremse (2) auf Basis einer Drehmomentänderung (ΔM) eines elektrischen Fahrzeugantriebs (18) des Kraftfahrzeugs (1) erfolgt.

5. Verfahren (102, 202) nach einem der vorstehenden Ansprüche,
wobei die Grenzbremswirkung (Fg) derart definiert ist, dass keine messbare Bremswirkung an der Fahrzeugbremse (2) auftritt.

6. Verfahren (102, 202) nach einem der vorstehenden Ansprüche,
wobei der Ausgangsanlegedruck (pa) vor dem erstmaligen Verfahrensdurchlauf derart gewählt wird, dass durch ein Anlegen des Ausgangsanlegedrucks (pa) ein Lüftspiel (L) der Fahrzeugbremse (2) vollständig oder nahezu vollständig überwunden wird.

7. Verfahren (102, 202) nach einem der vorstehenden Ansprüche,
wobei das Anlegen (104, 204) des Ausgangsanlegedrucks (pa) für eine Zeitspanne von einer Sekunde bis 10 Sekunden erfolgt.

8. Verfahren (102, 202) nach Anspruch 1,
wobei das Reduzieren (110, 210) des Ausgangsanlegedrucks (pa) derart erfolgt, dass der Ausgangsanlegedruck (pa) um eine definierte Druckdifferenz reduziert wird.

9. Verfahren (102, 202) nach Anspruch 8,
wobei die Druckdifferenz 0,05 bar bis 0,1 bar beträgt.

10. Verfahren (102, 202) nach einem der vorstehenden Ansprüche,
wobei das Verfahren (102, 202) für mehrere oder alle Fahrzeugbremsen (2) des Kraftfahrzeugs (1) durchgeführt wird, insbesondere für alle Fahrzeugbremsen (2) einer oder mehrerer Achsen (20) des Kraftfahrzeugs (1) oder für sämtliche Fahrzeugbremsen (2) des Kraftfahrzeugs (1).

11. Verfahren (102, 202) nach einem der vorstehenden Ansprüche,
wobei das Anlegen (104, 204) des Ausgangsanlegedrucks (pa) an die Fahrzeugbremse (2) periodisch erfolgt.

12. Steuergerät (302) für eine Fahrzeugbremse (2) eines Nutzfahrzeugs,
**dadurch gekennzeichnet, dass** das Steuergerät (203) dazu eingerichtet ist, das Verfahren (102, 202) nach einem der Ansprüche 1 bis 11 auszuführen.

13. Steuergerät (302) nach Anspruch 12,
wobei das Steuergerät (302) als dediziertes Steuergerät (302) oder als zentrales Steuergerät (302) ausgebildet ist.

14. Computerprogrammprodukt (402) enthaltend Befehle (404), die, wenn sie auf einem Computer ausgeführt werden, den Computer veranlassen, ein Steuergerät (302) nach Anspruch 12 oder 13 zu bilden und/oder das Verfahren (102, 202) nach einem der Ansprüche 1 bis 11 auszuführen.

15. Kraftfahrzeug (1), insbesondere Nutzkraftfahrzeug, umfassend wenigstens eine Fahrzeugbremse (2), und ein Steuergerät (302) nach Anspruch 12 oder 13.

16. Kraftfahrzeug (1) nach Anspruch 15, wobei das Kraftfahrzeug (1) als elektrisch angetriebenes Kraftfahrzeug (1) ausgebildet ist.

## Claims

1. Method (102, 202) for adjusting an application pressure (p) of a vehicle brake (2), in particular a commercial vehicle disk brake (4), of a motor vehicle (1) while the motor vehicle (1) is in motion, comprising the steps of:
- applying (104, 204) an initial application pressure (pa) to the vehicle brake (2),
- determining (106, 206) a braking effect (Fb) of the vehicle brake (2) while the initial application pressure (pa) is applied to the vehicle brake (2), **characterized by** the steps of:
- comparing (108, 208) the determined braking effect (Fb) with a limit braking effect (Fg),
- reducing (110, 210) the initial application pressure (pa) to a reduced application pressure (pr) if the determined braking effect (Fb) exceeds the limit braking effect (Fg).

2. Method (102, 202) according to claim 1,
wherein the reduced application pressure (pr) is defined as the new initial application pressure (pa) and wherein the method further comprises:
- repeating (112, 212) the method steps (104-110, 204-210) until the determined braking effect (Fb) is less than the limit braking effect (Fg).

3. Method (102) according to claim 1 or 2,
wherein the braking effect (Fb) of the vehicle brake (2) is determined (106) by means of at least one wheel sensor (16).

4. Method (202) according to claim 1 or 2,
wherein the braking effect (Fb) of the vehicle brake (2) is determined (206) on the basis of a torque change (ΔM) of an electric vehicle drive (18) of the motor vehicle (1).

5. Method (102, 202) according to any of the preceding claims,
wherein the limit braking effect (Fg) is defined such that no measurable braking effect occurs at the vehicle brake (2).

6. Method (102, 202) according to any of the preceding claims,
wherein the initial application pressure (pa) is selected before the first method cycle such that by applying the initial application pressure (pa), a clearance (L) of the vehicle brake (2) is completely or almost completely overcome.

7. Method (102, 202) according to any of the preceding claims,
wherein the initial application pressure (pa) is applied (104, 204) for a period of from one second to 10 seconds.

8. Method (102, 202) according to claim 1,
wherein the initial application pressure (pa) is reduced (110, 210) such that the initial application pressure (pa) is reduced by a defined pressure difference.

9. Method (102, 202) according to claim 8,
wherein the pressure difference is from 0.05 bar to 0.1 bar.

10. Method (102, 202) according to any of the preceding claims,
wherein the method (102, 202) is carried out for multiple or all vehicle brakes (2) of the motor vehicle (1), in particular for all vehicle brakes (2) of one or more axles (20) of the motor vehicle (1) or for all vehicle brakes (2) of the motor vehicle (1).

11. Method (102, 202) according to any of the preceding claims,
wherein the initial application pressure (pa) is applied (104, 204) to the vehicle brake (2) periodically.

12. Control unit (302) for a vehicle brake (2) of a commercial vehicle, **characterized in that** the control unit (203) is configured to execute the method (102, 202) according to any of claims 1 to 11.

13. Control unit (302) according to claim 12,
wherein the control unit (302) is designed as a dedicated control unit (302) or as a central control unit (302).

14. Computer program product (402) comprising instructions (404) which, when executed on a computer, cause the computer to form a control unit (302) according to claim 12 or 13 and/or to execute the method (102, 202) according to any of claims 1 to 11.

15. Motor vehicle (1), in particular a commercial vehicle, comprising at least one vehicle brake (2), and a control unit (302) according to claim 12 or 13.

16. Motor vehicle (1) according to claim 15, wherein the motor vehicle (1) is designed as an electrically driven motor vehicle (1).

## Revendications

1. Procédé (102, 202) permettant de régler une pression d'application (p) d'un frein de véhicule (2), en particulier d'un frein à disque de véhicule utilitaire (4), d'un véhicule automobile (1) pendant le déplacement du véhicule automobile (1), comportant les étapes consistant à :
- appliquer (104, 204) une pression d'application initiale (pa) au frein de véhicule (2),
- déterminer (106, 206) un effet de freinage (Fb) du frein de véhicule (2) alors que la pression d'application initiale (pa) est appliquée au frein de véhicule (2), **caractérisé par** les étapes consistant à :
- comparer (108, 208) l'effet de freinage (Fb) déterminé avec un effet de freinage limite (Fg),
- réduire (110, 210) la pression d'application initiale (pa) à une pression d'application réduite (pr) lorsque l'effet de freinage (Fb) déterminé dépasse l'effet de freinage limite (Fg).

2. Procédé (102, 202) selon la revendication 1,
dans lequel la pression d'application réduite (pr) est définie comme nouvelle pression d'application initiale (pa), et dans lequel le procédé comprend en outre :
- la répétition (112, 212) des étapes de procédé (104-110, 204-210) jusqu'à ce que l'effet de freinage (Fb) déterminé soit inférieur à l'effet de freinage limite (Fg).

3. Procédé (102) selon la revendication 1 ou 2,
dans lequel la détermination (106) de l'effet de freinage (Fb) du frein de véhicule (2) est effectuée au moyen d'au moins un capteur de roue (16).

4. Procédé (202) selon la revendication 1 ou 2,
dans lequel la détermination (206) de l'effet de freinage (Fb) du frein de véhicule (2) est effectuée sur la base d'une variation de couple (ΔM) d'un entraînement de véhicule électrique (18) du véhicule automobile (1).

5. Procédé (102, 202) selon l'une des revendications précédentes,
dans lequel l'effet de freinage limite (Fg) est défini de telle sorte qu'aucun effet de freinage mesurable ne se produit sur le frein de véhicule (2).

6. Procédé (102, 202) selon l'une des revendications précédentes,
dans lequel la pression d'application initiale (pa) est choisie, avant la première exécution du procédé, de telle sorte que, par une application de la pression d'application initiale (pa), un jeu (L) du frein de véhicule (2) est complètement ou presque complètement surmonté.

7. Procédé (102, 202) selon l'une des revendications précédentes,
dans lequel l'application (104, 204) de la pression d'application initiale (pa) est effectuée pendant une durée allant d'une seconde à dix secondes.

8. Procédé (102, 202) selon la revendication 1,
dans lequel la réduction (110, 210) de la pression d'application initiale (pa) est effectuée de telle sorte que la pression d'application initiale (pa) est réduite d'une différence de pression définie.

9. Procédé (102, 202) selon la revendication 8,
dans lequel la différence de pression va de 0,05 bar à 0,1 bar.

10. Procédé (102, 202) selon l'une des revendications précédentes,
dans lequel le procédé (102, 202) est mis en œuvre pour plusieurs ou pour tous les freins de véhicule (2) du véhicule automobile (1), en particulier pour tous les freins de véhicule (2) d'un ou de plusieurs essieux (20) du véhicule automobile (1) ou pour tous les freins de véhicule (2) du véhicule automobile (1).

11. Procédé (102, 202) selon l'une des revendications précédentes,
dans lequel l'application (104, 204) de la pression d'application initiale (pa) au frein de véhicule (2) est effectuée périodiquement.

12. Appareil de commande (302) pour un frein de véhicule (2) d'un véhicule utilitaire, **caractérisé en ce que** l'appareil de commande (203) est configuré pour exécuter le procédé (102, 202) selon l'une des revendications 1 à 11.

13. Appareil de commande (302) selon la revendication 12,
dans lequel l'appareil de commande (302) est conçu comme un appareil de commande dédié (302) ou comme un appareil de commande central (302).

14. Produit-programme d'ordinateur (402) contenant des instructions (404) qui, lorsqu'elles sont exécutées sur un ordinateur, amènent l'ordinateur à former un appareil de commande (302) selon la revendication 12 ou 13 et/ou à exécuter le procédé (102, 202) selon l'une des revendications 1 à 11.

15. Véhicule automobile (1), en particulier véhicule utilitaire, comprenant au moins un frein de véhicule (2), et un appareil de commande (302) selon la revendication 12 ou 13.

16. Véhicule automobile (1) selon la revendication 15, dans lequel le véhicule automobile (1) est conçu comme un véhicule automobile à entraînement électrique (1).
